# EUROPÄISCHE PATENTSCHRIFT

(11) **EP 2 046 473 B1**
(45) Veröffentlichungstag und Bekanntmachung des Hinweises auf die Patenterteilung: **06.03.2013**
(21) Anmeldenummer: 07764683.4
(22) Anmeldetag: 16.06.2007
(51) Int. Cl.: B01D 29/90

(54) **FILTERVORRICHTUNG**
FILTER DEVICE
DISPOSITIF DE FILTRATION

(30) Priorität: 03.08.2006 DE 102006036231
(43) Veröffentlichungstag der Anmeldung: 15.04.2009
(73) Patentinhaber: Hydac Fluidtechnik GmbH, 66280 Sulzbach/Saar (DE)
(72) Erfinder: LAUER, Viktor, 66809 Nalbach (DE); SAKRASCHINSKY, Michael, 66386 St. Ingbert (DE)
(74) Vertreter: Bartels, Martin Erich Arthur
(86) Internationale Anmeldenummer: PCT/EP2007/005314
(87) Internationale Veröffentlichungsnummer: WO 2008/014846

(56) Entgegenhaltungen:
- WO-A-02/062447
- WO-A-03/076041
- WO-A-2005/061072
- DE-A1- 1 948 958

## Beschreibung

Die Erfindung betrifft eine Filtervorrichtung mit einem Filtergehäuse und mindestens einem Filterelement, das im Filtergehäuse aufnehmbar ist und einen inneren Fluidraum aufweist, der durch ein Filtermedium begrenzt ist, das vom zu reinigenden Fluid durchströmbar ist und den inneren Fluidraum von einem im Filtergehäuse befindlichen äußeren Fluidraum trennt, wobei das Filtergehäuse einen Fluideinlass und einen Fluidauslass für abgereinigtes Fluid aufweist, wobei dem Fluideinlass eine Fluidleiteinrichtung nachgeschaltet ist, die derart umrüstbar ist, dass sie wahlweise einen Strömungsweg zwischen Fluideinlass und äußerem Fluidraum oder zwischen Fluid-einlass und innerem, im Filterelement befindlichen Fluidraum bildet, wobei an der Fluidleiteinrichtung zwei Rüstplätze vorhanden sind, von denen der erste Rüstplatz dem äußeren Fluidraum zugeordnet ist und der zweite Rüstplatz dem inneren Fluidraum zugeordnet ist, wobei jeder Rüstplatz zumindest einen Fluiddurchgangskanal aufweist, die zur Umrüstung der Fluidleiteinrichtung wahlweise sperrbar sind, und wobei die Fluidleiteinrichtung eine von den Fluiddurchgangskanälen durchzogene Adapterplatte aufweist, die umfangsseitig eine Abdichtung zwischen Einlassteil und Filtrationsteil des Filtergehäuses bildet und die einen in das Filterteil vorspringenden, koaxialen Stutzen als Elementaufnahme für das Filterelement und zur Bildung eines Strömungsweges in dessen inneren Fluidraum aufweist. Eine derartige Filtervorrichtung ist aus WO 2005/061072 A1 bekannt.

Es besteht die Möglichkeit einer Umrüstung, die es erlaubt, ein und dieselbe Filtervorrichtung, je nach den einsatzspezifischen Anforderungen, mit einem Filterelement zu betreiben, das vom Fluid von außen nach innen beim Filtrationsvorgang durchströmt wird, oder mit einem Filterelement, bei dem der Filtrationsvorgang so erfolgt, dass das Filterelement von innen nach außen durchströmt wird. Dadurch eröffnen sich universellere Einsatzmöglichkeiten, da je nach Druckniveau, Volumenstrom und weiterer Betriebsparameter es vorzuziehen ist, dass beim Filtrationsvorgang das Filterelement von außen nach innen oder mit Strömung von innen nach außen durchströmt wird. Mit standardisierter Bauweise, wodurch die erstrebte wirtschaftliche Fertigung ermöglicht wird, lassen sich somit unterschiedliche Anforderungen abdecken. Zudem verringert sich aufgrund der standardisierten Bauweise der Aufwand für Lagerhaltung und Logistik. Bei einer kompakten Bauweise bildet die Adpaterplatte in Doppelfunktion die Aufnahme des Filterelementes und stellt, entsprechend der gewählten Ausrüstung, als Fluidleiteinrichtung die gewünschten Strömungswege zur Verfügung. Hinsichtlich eines einfachen und bequemen Aus- oder Umrüstvorgangs lässt die bekannte Lösung noch Wünsche offen.

Filtervorrichtungen weiterer Art sind in verschiedenen Ausführungsformen allgemein bekannt und kommen bei den verschiedensten Fluidsystemen zum Einsatz, insbesondere bei Anlagen mit Hydrauliksystemen. Da aufgrund der vielfachen Einsatzmöglichkeiten derartiger Filtervorrichtungen diese in sehr hohen Stückzahlen herzustellen sind, ist für derartige Filtervorrichtungen eine kostengünstig und wirtschaftlich herstellbare Bauweise anzustreben.

Im Hinblick hierauf stellt sich die Erfindung die Aufgabe, eine Filtervorrichtung zur Verfügung zu stellen, deren Bauweise eine Anpassung an unterschiedliche, in Frage kommende Betriebsweisen ermöglicht, so dass mit ein und derselben Filtervorrichtung unterschiedliche Einsatzzwecke abgedeckt werden können.

Erfindungsgemäß ist diese Aufgabe durch eine Filtervorrichtung gelöst, die die Merkmale des Patentanspruches 1 in seiner Gesamtheit aufweist.

Danach besteht eine Besonderheit der Erfindung darin, dass die Fluiddurchgangskanäle des ersten Rüstplatzes an der Adapterplatte auf einer zur Hauptachse konzentrischen Kreislinie angeordnet sind, deren Radius so gewählt ist, dass die Fluiddurchgangskanäle Strömungswege zur Außenseite des Filterelements bilden, dass die Fluiddurchgangskanäle des zweiten Rüstplatzes an der Adapterplatte auf einer zur Hauptachse konzentrischen Kreislinie angeordnet sind, deren Radius so gewählt ist, dass die Fluiddurchgangskanäle Strömungswege ins Innere des als Elementaufnahme dienenden Stutzens bilden, dass die Fluiddurchgangskanäle der Fluidleiteinrichtung als Sitz für darin wahlweise einsetzbare, in die Sperrstellung vorgespannte Bypassventile ausgebildet sind, und dass die Bypassventile durch Ventileinsätze gebildet sind, die als vormontierte Funktionseinheit, einschließlich federbelastetem Schließteil und Ventilsitz, in ausgewählte Fluiddurchgangskanäle einsetzbar sind.

Erfindungsgemäß sind die Fluiddurchgangskanäle des ersten Rüstplatzes an der Adapterplatte auf einer zur Hauptachse konzentrischen Kreislinie angeordnet, deren Radius so gewählt ist, dass die Fluiddurchgangskanäle Strömungswege zur Außenseite des Filterelementes bilden. Bei erfindungsgemäßer Gestaltung sind auch die Fluiddurchgangskanäle des zweiten Rüstplatzes an der Adapterplatte auf einer zur Hauptachse konzentrischen Kreislinie angeordnet, wobei der Radius bei dieser Kreislinie so gewählt ist, dass die Fluiddurchgangskanäle Strömungswege ins Innere des als Elementaufnahme dienenden Stutzens bilden.

Erfindungsgemäß sind die Fluiddurchgangskanäle der Fluidleiteinrichtung als Sitz für darin wahlweise einsetzbare, in die Sperrstellung vorgespannte Bypassventile ausgebildet. Bei der Aus- oder Umrüstung durch wahlweises Sperren der Fluiddurchgangskanäle des ersten oder zweiten Rüstplatzes wird hierbei durch den Einbau von Bypassventilen gleichzeitig die Sicherung der Filtervorrichtung gegen eine gegebenenfalls am Filtermedium anstehende übermäßige Druckdifferenz erreicht. Durch die sehr eindeutige Zuordnung gestaltet sich der Vorgang des Umrüstens einfach und sicher. Der Vorgang des Aus- oder Umrüstens gestaltet sich besonders einfach und bequem, da die Bypassventile durch Ventileinsätze gebildet sind, die als vormontierte Funktionseinheit, einschließlich federbelastetem Schließteil und Ventilsitz, in ausgewählte Fluiddurchgangskanäle einsteckbar sind.

Bei vorteilhaften Ausführungsbeispielen weist jeder Rüstplatz mehrere Fluiddurchgangskanäle auf, die zur Umrüstung der Fluidleiteinrichtung wahlweise sperrbar sind. Der Vorgang der Umrüstung besteht daher lediglich in der Maßnahme, die Fluiddurchgangskanäle des ersten Rüstplatzes oder die Fluiddurchgangskanäle des zweiten Rüstplatzes zu sperren.

In vorteilhafter Weise kann die Anordnung so getroffen sein, dass das Filtergehäuse eine Hauptachse definiert, und dass die Fluiddurchgangskanäle des ersten Rüstplatzes in einem größeren Abstand von der Hauptachse gelegen sind als die Fluiddurchgangskanäle des zweiten Rüstplatzes. Dadurch befinden sich die Mündungen der Kanäle für den im Filterelement von außen nach innen erfolgenden Filtrationsvorgang im Außenwandbereich des Filtergehäuses, so dass das Filterelement unmittelbar an seiner Außenseite angeströmt wird, während die Fluiddurchgangskanäle des zweiten Rüstplatzes im der Hauptachse näherliegenden Bereich münden, der dem inneren Fluidraum des Filterelementes benachbart ist.

Die erfindungsgemäße Filtervorrichtung weist vorzugsweise ein kreiszylindrisches Filterelement auf, bei dem das Filtermedium an einem fluiddurchlässigen Stützrohr anliegt und wobei das Filterelement im Filtergehäuse derart aufnehmbar ist, dass sich das Stützrohr konzentrisch zur Hauptachse erstreckt. Filterelemente dieser Bauweise finden in der einschlägigen Technik weit verbreitete Anwendung.

Vorzugsweise ist die Fluidleiteinrichtung im Filtergehäuse zwischen einem an einen Gehäusedeckel angrenzenden, den Fluideinlass aufweisenden Einlassteil und einem zu diesem axial versetzten, den äußeren Fluidraum bildenden Filtrationsteil angeordnet, wobei vorzugsweise im Filtrationsteil eine Aufnahme für das Filterelement so ausgebildet ist, dass sich das Filterelement mit demjenigen Ende, an dem der innere Fluidraum zugänglich ist, zu der Fluidleiteinrichtung unmittelbar benachbart befindet

Je nach gewählter Betriebsweise sind vorzugsweise unterschiedliche Filterelemente vorgesehen. Wenn entsprechend der Ausrüstung der Fluidleiteinrichtung der Filtrationsvorgang in der Weise erfolgt, dass das Filterelement von außen nach innen durchströmt wird, ist vorzugsweise ein Filterelement mit einem Stützrohr vorgesehen, das an den inneren Fluidraum angrenzt und außenseitig vom Filtermedium umgeben ist. Demgegenüber ist, wenn das Filterelement von innen nach außen durchströmt wird, vorzugsweise ein Filterelement mit einem Stützrohr vorgesehen, das dem äußeren Fluidraum nächstgelegen und an seiner Innenseite mit dem Filtermedium versehen ist.

Nachstehend ist die Erfindung anhand eines in der Zeichnung dargestellten Ausführungsbeispieles im Einzelnen erläutert. Es zeigen:
- Fig. 1 einen verkürzt und leicht schematisch vereinfacht gezeichneten Längsschnitt des Ausführungsbeispieles der erfindungsgemäßen Filtervorrichtung, wobei der Betriebszustand dargestellt ist, bei dem beim Filtrationsvorgang das Filterelement von außen nach innen durchströmt wird;
- Fig. 2 einen Querschnitt des Ausführungsbeispieles entsprechend der Schnittlinie II-II von Fig. 1;
- Fig. 3 einen der Fig. 1 entsprechenden Längsschnitt, wobei jedoch der Betriebszustand dargestellt ist, bei dem das Filterelement beim Filtrationsvorgang von innen nach außen durchströmt wird;
- Fig. 4 einen Querschnitt des Ausführungsbeispieles entsprechend der Schnittlinie IV-IV von Fig. 3;
- Fig. 5 eine gegenüber Fig. 1 bis 4 vergrößert dargestellte, perspektivische Schrägansicht der als Adapterplatte gestalteten Fluidleiteinrichtung des Ausführungsbeispieles;
- Fig. 6 eine abgebrochen, aufgeschnitten und perspektivisch gezeichnete Darstellung des die Fluidleiteinrichtung enthaltenden Endabschnittes des Ausführungsbeispieles;
- Fig. 7 eine gegenüber einer praktischen Ausführungsform in etwa zweifach größerem Maßstab gezeichnete perspektivische Darstellung eines Bypass-Ventileinsatzes des Ausführungsbeispieles der Filtervorrichtung und
- Fig. 8 und 9 perspektivische Einzeldarstellungen des bewegbaren Schließteiles bzw. des Ventilsitzes des Ventileinsatzes von Fig. 7.

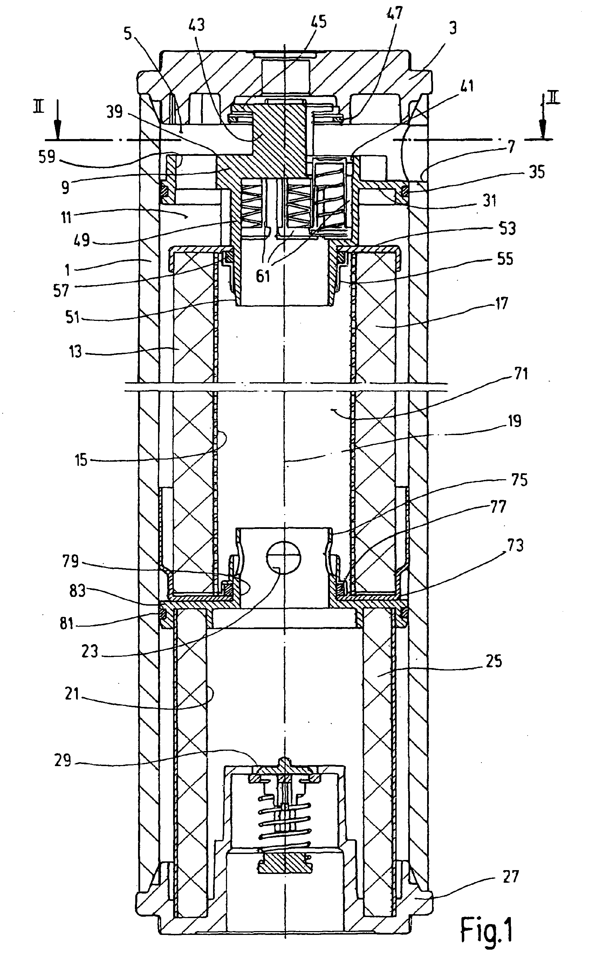

Die erfindungsgemäße Vorrichtung weist ein Filtergehäuse 1 in Form eines kreiszylindrischen, durch Strangpressen hergestellten metallischen Rohrkörpers auf. Am in Fig. 1 obenliegend gezeigten Ende ist das Filtergehäuse 1 durch einen Gehäusedeckel 3 in Form eines Druckgußteiles aus Aluminium abgeschlossen. An die Innenseite des Deckels 3 schließt sich ein Einlassteil 5 an in das über eine Einlassöffnung 7 ein zu reinigendes Fluid einströmbar ist. Das Einlassteil 5 ist durch eine Fluidleiteinrichtung, welche durch eine Adapterplatte 9 gebildet ist, von einem Filtrationsteil 11 getrennt, in dem ein Filterelement 13 untergebracht ist. Bei diesem handelt es sich um ein Filterelement einer allgemein üblichen Bauweise mit einem fluiddurchlässigen, kreiszylinderförmigen Stützrohr 15 und einem an diesem anliegenden Filtermedium 17, das ebenfalls von an sich bekannter Art ist, wobei die Filterfeinheit dem jeweiligen Einsatzzweck angepasst ist. Wie Fig. 1 zeigt, ist das Filterelement 13 im Filtergehäuse 1 so aufgenommen, dass das Stützrohr 15 konzentrisch zu der Hauptachse 19 des Filtergehäuses 1 verläuft.

Innerhalb des Filtergehäuses 1 ist ein Schutzsieb 21 dem Filterelement 13 in der Weise nachgeschaltet, dass vom Filterelement 13 abgereinigtes Fluid über eine Eintrittsöffnung 23 in den Innenraum des Schutzsiebes 21 gelangt. Nach Passieren des Siebmediums 25 des Schutzsiebes verläßt das abgereinigte Fluid das Filtergehäuse 1 über einen in der Fig. nicht dargestellten Fluidauslass. Das Schutzsieb 21 ist durch Verkleben mit einem den unteren Gehäuseabschluss bildenden Bodendeckel 27 verbunden, an dem sich ein in die Schließstellung vorgespanntes Druckhalteventil 29 befindet.

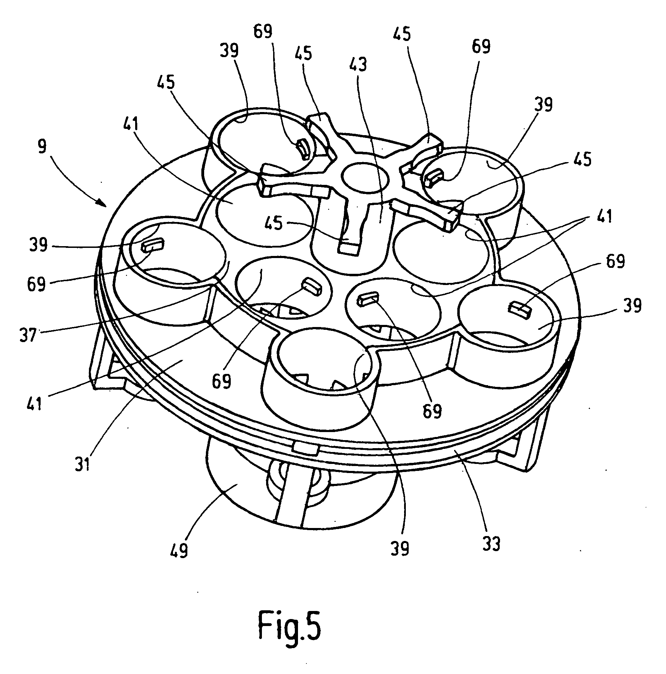

Nähere Einzelheiten der als Fluidleiteinrichtung dienenden Adapterplatte 9 sind besonders deutlich aus Fig. 5 entnehmbar. Die Adapterplatte 9 besitzt ein kreisrundes Plattenteil 31 mit einer außenumfangsseitig befindlichen Ringnut 33, in der ein O-Ring 35 aufgenommen ist, siehe Fig. 1, 3und 6, der die Adapterplatte 9 an der Innenwand des Filtergehäuses 1 abdichtet, so dass die Adapterplatte 9 ein Trennelement zwischen Einlassteil 5 und filtrationsteil 11 bildet. An einem aus dem Plattenteil 31 axial vorstehenden Bund 37 befinden sich zur Bildung von Fluiddurchgangskanälen, auf einer äußeren Kreislinie liegend, fünf äußere Öffnungen 39 sowie, auf einer radial weiter innenliegenden Kreisringlinie liegend, fünf innere Öffnungen 41, wobei in Fig. 5 von den inneren Öffnungen 41 nur vier Öffnungen sichtbar sind. Zur Befestigung der Adapterplatte 9 am Gehäusedeckel 3 ist ein vom Bund 37 axial vorspringender, zentral gelegener Zapfen 43 vorgesehen, an dem endseits ein Sternkörper mit radial verlaufenden Armen 45 (Fig. 5) angeformt ist. Wie Fig. 1, 3 und 6 zeigen, sind die Enden der Arme 45 über einen Sicherungsring 47, der in einer Ringnut des Gehäusedeckels 3 sitzt, mit diesem verbunden.

Auf der dem Zapfen 43 entgegengesetzten Seite bildet die Adapterplatte 9 einen koaxial zur Hauptachse 19 axial vorstehenden Rohrstutzen 49, der mit seiner abgeschrägten Außenseite 51 eine Elementaufnahme für das Filterelement 13 bildet, das an seiner Endkappe 53 eine Randeinfassung 55 aufweist, die auf den Stuten 49 aufsteckbar ist, wobei ein O-Ring 57 eine Abdichtung bildet.

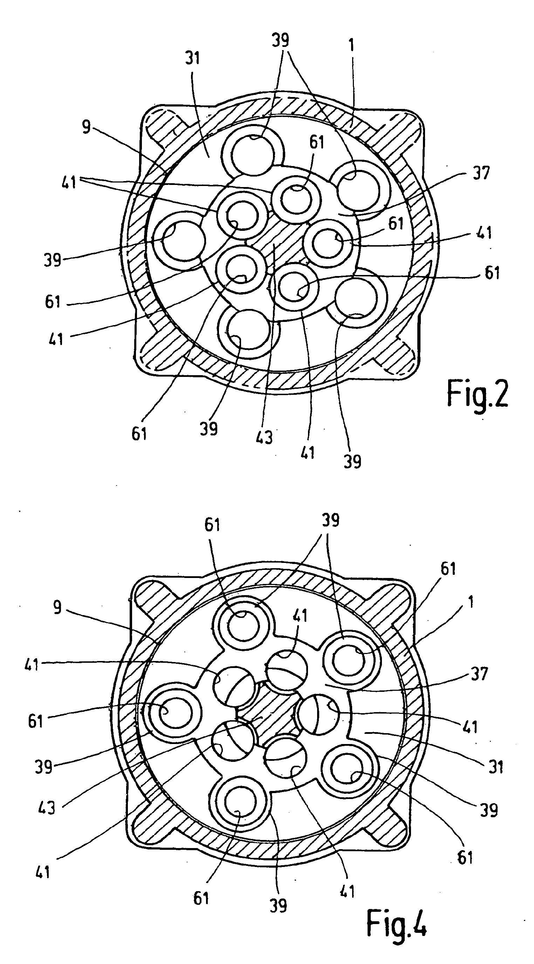

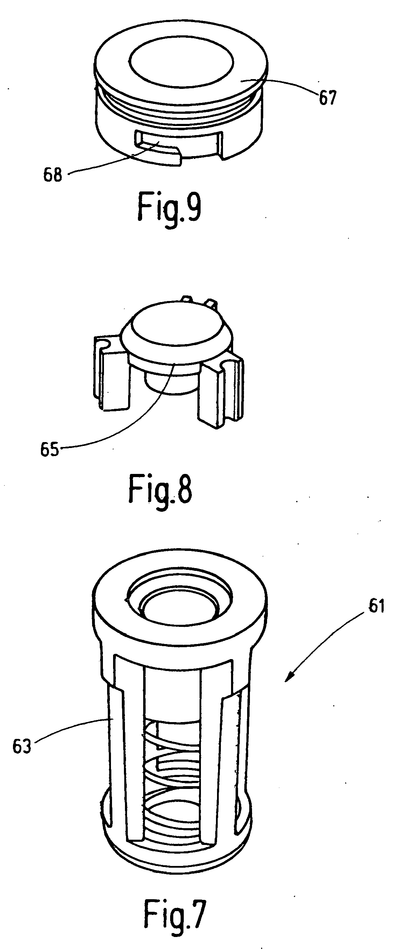

Wie erwähnt, ist die als Fluidleiteinrichtung dienende Adapterplatte 9 derart umrüst- oder ausrüstbar, dass beim Filtrationsvorgang das Filterelement 13 entweder von außen nach innen oder von innen nach außen durchströmt wird. Fig. 1 und 2 zeigen den Zustand, bei dem das Filterelement 13 von außen nach innen durchströmt wird. Während fig. 5 die Adapterplatte 9 in nicht ausgerüstetem Zustand zeigt, wobei keine der Öffnungen 39 und 41 mit einem Sperrelement bestückt ist, ist die Adapterplatte 9 bei dem Betriebszustand von Fig. 1 und 2 so ausgerüstet, dass die dem ersten Rüstplatz zugehörigen Öffnungen 39 freigegeben sind und damit jeweils freie fluiddurchgangskanäle 59 (Fig. 1) bilden, wobei diese Fluiddurchgangskanäle 59, wie ebenfalls aus Fig. 1 erkennbar ist, im Filtrationsteil 11 zur Außenseite des Filterelementes 13 führende Strömungswege bilden. Die dem inneren Rüstplatz zugehörigen Öffnungen 41 der Adapterplatte 9 sind durch Ventileinsätze 61 gesperrt, von denen einer in vergrößerter Darstellung in Fig. 7 gesondert gezeigt ist. Dabei handelt es sich um Bypassventile mit einem in einem Käfig 63 verschiebbar geführten, federbelasteten Schließkörper 65, der mit einem Ventilsitz 67 zusammenwirkt, siehe Fig. 7 bis 9. An der Außenseite des Ventilsitzes 67 befindet sich eine Bajonettführung 68, mittels deren der in eine Öffnung 39 oder 41 eingesetzte Ventileinsatz 61 durch Eingriff mit einer Sicherungsnase 69 (Fig. 5) sicherbar ist. Fig. 2 zeigt deutlich, dass die inneren Öffnungen 41 der Adapterplatte 9 mit den Ventileinsätzen 61 bestückt sind, während die äußeren Öffnungen 39 offen sind.

Bei dieser Betriebsweise findet ein Filterelement 13 Benutzung, bei dem das Stützrohr 15 innenliegend ist und an den inneren Fluidraum 71 des Filterelementes 13 angrenzt, wobei das Stützrohr 15 außenumfangsseitig vom Filtermedium 17 umgeben ist. Hierbei weist das Filterelement 13 einen Bodendeckel 73 auf dessen zentrale Öffnung eine der Randeinfassung 55 entsprechende Randeinfassung 75 aufweist, in die sich, mit Zwischenlage eines O-Ringes 77, ein Eingangsteil 79 des Schutzsiebes 21 erstreckt, so dass das abgereinigte Fluid über die hieran befindliche Öffnung 23 in das Schutzsieb 21 gelangt. Der Eingangsteil 79 des Schutzsiebes 21 befindet sich an einem gegenüber dem Filtergehäuse 1 mittels eines O-Ringes 81 abgedichteten Deckelteil 83, das zusammen mit der Randeinfassung 75 eine Elementaufnahme zwischen Filterelement 13 und Schutzsieb 21 bildet.

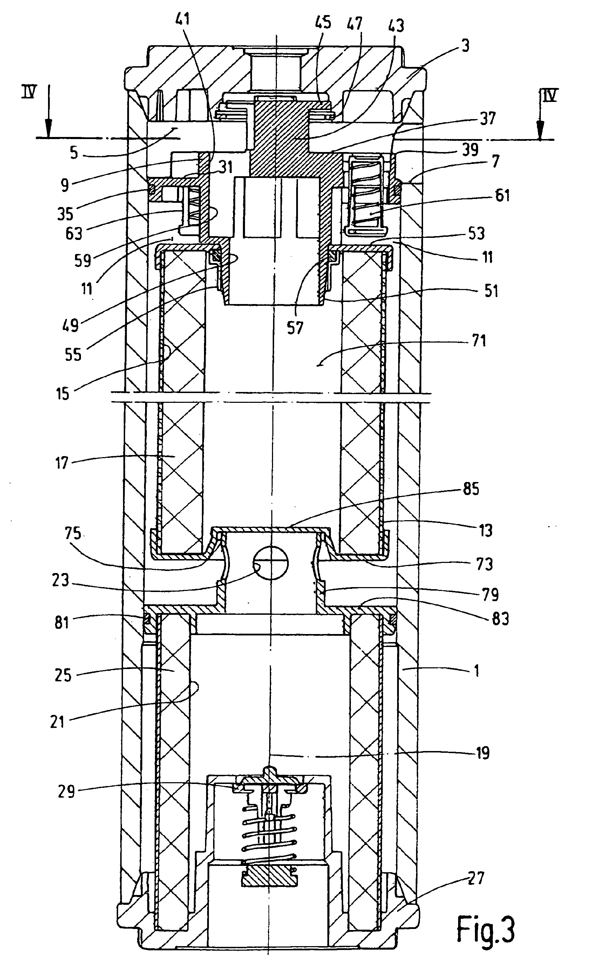

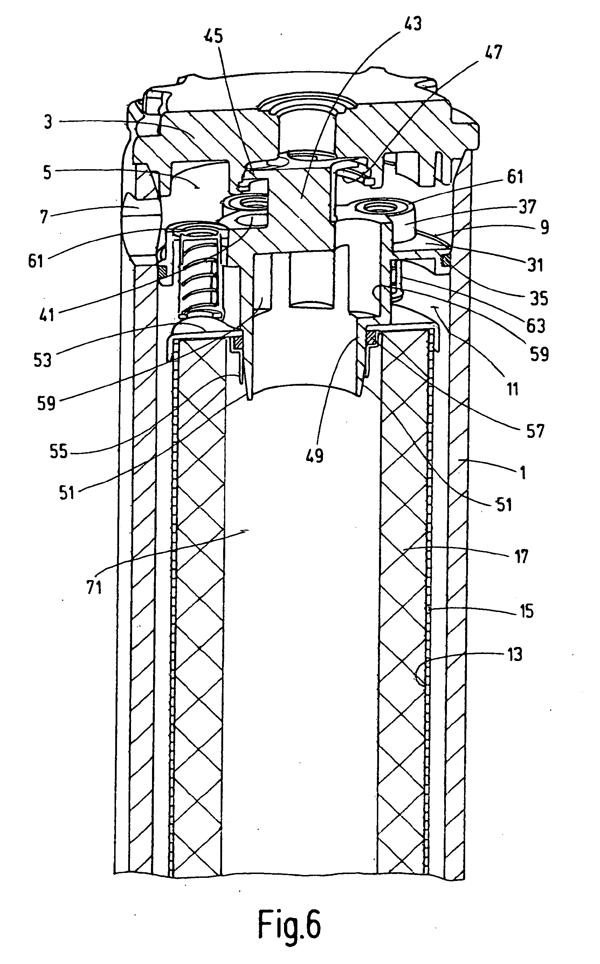

Die Darstellung von Fig. 3 und 4 zeigt den Betriebszustand, bei dem die Adapterplatte 9 so umgerüstet ist, dass die dem äußeren Rüstplatz zugehörigen Öffnungen 39 mit Ventileinsätzen 61 bestückt sind, während die dem inneren Rüstplatz zugehörigen Öffnungen 41 frei sind, um Fluiddurchgangskanäle 59 zu bilden, die ins Innere des Stutzens 49 und damit in den inneren Fluidraum 71 des Filterelementes 13 führen. Wie Fig. 3 und 6 ebenfalls zeigen, findet hierbei ein Filterelement 13 Benutzung, bei dem das Stützrohr 15 außenliegend angeordnet und an seiner Innenseite mit dem Filtermedium 17 versehen ist. Das so bei Durchlauf von innen nach außen abgereinigte Fluid gelangt über die Öffnung 23 zum Schutzsieb 21. Wie Fig. 3 deutlich zeigt, ist hierbei der untere Bodendeckel 73 des Filterelementes 13 durchgehend, so dass er den inneren Fluidraum 71 schließt. Eine Vertiefung 85 im Bodendeckel 73 bildet in Zusammenwirkung mit dem Eingangsteil 79 des Schutzsiebes 21 eine untere Zentrierung des Filterelementes 13.

## Patentansprüche

1. Filtervorrichtung
- mit einem Filtergehäuse (1) und mindestens einem Filterelement (13), das im Filtergehäuse (1) aufnehmbar ist und einen inneren Fluidraum (71) aufweist, der durch ein Filtermedium (17) begrenzt ist, das vom zu reinigenden Fluid durchströmbar ist und den inneren Fluidraum (71) von einem im Filtergehäuse (1) befindlichen äußeren Fluidraum (11) trennt,
- wobei das Filtergehäuse (1) einen Fluideinlass (7) und einen Fluidauslass für abgereinigtes Fluid aufweist,
- wobei dem Fluideinlass (7) eine Fluidleiteinrichtung (9) nachgeschaltet ist, die derart umrüstbar ist, dass sie wahlweise einen Strömungsweg zwischen Fluideinlass (7) und äußerem Fluidraum (11) oder zwischen Fluideinlass (7) und innerem, im Filterelement (13) befindlichen Fluidraum (71) bildet,
- wobei an der Fluidleiteinrichtung (9) zwei Rüstplätze (39, 41) vorhanden sind, von denen der erste Rüstplatz (39) dem äußeren Fluidraum (11) zugeordnet ist und der zweite Rüstplatz (41) dem inneren Fluidraum (71) zugeordnet ist,
- wobei jeder Rüstplatz zumindest einen Fluiddurchgangskanal (59) aufweist, die zur Umrüstung der Fluidleiteinrichtung (9) wahlweise sperrbar sind, und
- wobei die Fluidleiteinrichtung eine von den Fluiddurchgangskanälen (59) durchzogene Adapterplatte (9) aufweist, die umfangsseitig eine Abdichtung (35) zwischen Einlassteil (5) und Filtrationsteil (11) des Filtergehäuses (1) bildet und die einen in das Filtrationsteil (11) vorspringenden, koaxialen Stutzen (49) als Elementaufnahme für das Filterelement (13) und zur Bildung eines Strömungsweges in dessen inneren Fluidraum (71) aufweist,
- **dadurch gekennzeichnet, dass** die Fluiddurchgangskanäle (59) des ersten Rüstplatzes (39) an der Adapterplatte (9) auf einer zur Hauptachse (19) konzentrischen Kreislinie angeordnet sind, deren Radius so gewählt ist, dass die Fluiddurchgangskanäle (59) Strömungswege zur Außenseite des Filterelementes (13) bilden,
- dass die Fluiddurchgangskanäle (59) des zweiten Rüstplatzes (41) an der Adapterplatte (9) auf einer zur Hauptachse (19) konzentrischen Kreislinie angeordnet sind, deren Radius so gewählt ist, dass die Fluiddurchgangskanäle (59) Strömungswege ins Innere des als Elementaufnahme dienenden Stutzens (49) bilden,
- dass die Fluiddurchgangskanäle (59) der Fluidleiteinrichtung (9) als Sitz für darin wahlweise einsetzbare, in die Sperrstellung vorgespannte Bypassventile (61) ausgebildet sind, und
- dass die Bypassventile durch Ventileinsätze (61) gebildet sind, die als vormontierte Funktionseinheit, einschließlich federbelastetem Schließteil (65) und Ventilsitz (67), in ausgewählte Fluiddurchgangskanäle (59) einsetzbar sind.

2. Filtervorrichtung nach Anspruch 1, **dadurch gekennzeichnet, dass** das Filtergehäuse (1) eine Hauptachse (19) definiert, und dass die Fluiddurchgangskanäle (59) des ersten Rüstplatzes (39) in einem größeren Abstand von der Hauptachse (19) gelegen sind als die Fluiddurchgangskanäle (59) des zweiten Rüstplatzes (41).

3. Filtervorrichtung nach Anspruch 2, **dadurch gekennzeichnet, dass** ein kreiszylindrisches Filterelement (13) mit einem an einem fluiddurchlässigen Stützrohr (15) anliegenden Filtermedium (17) vorgesehen ist, wobei das Filterelement (13) im Filtergehäuse (1) derart aufnehmbar ist, dass sich das Stützrohr (15) konzentrisch zur Hauptachse (19) erstreckt.

4. Filtervorrichtung nach einem der vorhergehenden Ansprüche, **dadurch gekennzeichnet, dass** die Fluidleiteinrichtung (9) im Filtergehäuse (1) zwischen einem an einen Gehäusedeckel (3) angrenzenden, den Fluideinlass (7) aufweisenden Einlassteil (5) und einem zu diesem axial versetzten, den äußeren Fluidraum bildenden Filtrationsteil (11) angeordnet ist.

5. Filtervorrichtung nach einem der vorhergehenden Ansprüche, **dadurch gekennzeichnet, dass** bei einer Ausrüstung der Fluidleiteinrichtung (9) derart, dass sie einen Strömungsweg zum äußeren Fluidraum (11) bildet, ein Filterelement (13) mit einem Stützrohr (15) vorgesehen ist, das an den inneren Fluidraum (71) angrenzt und außenseitig vom Filtermedium (17) umgeben ist.

6. Filtervorrichtung nach einem der Ansprüche 1 bis 4, **dadurch gekennzeichnet, dass** bei einer Ausrüstung der Fluidleiteinrichtung (9) derart, dass sie einen Strömungsweg zum inneren Fluidraum (71) bildet, ein Filterelement (13) mit einem Stützrohr (15) vorgesehen ist, das dem äu-βeren Fluidraum (11) nächstgelegen und an seiner Innenseite mit dem Filtermedium (17) versehen ist.

## Claims

1. A filter device
- having a filter housing (1) and at least one filter element (13) which can be held in the filter housing (1) and an inner fluid space (71) bordered by a filter medium (17) through which a fluid to be cleaned can flow and separates the inner fluid space (71) from an outer fluid space (11) located in the filter housing (1),
- the filter housing (1) having a fluid inlet (7) and a fluid outlet for cleaned fluid,
- a fluid guide device (9) being connected downstream of the fluid inlet (7) and being able to be retrofitted such that it optionally forms a flow path between the fluid inlet (7) and the outer fluid space (11) or between the fluid inlet (7) and the inner fluid space (71) located within the filter element (13),
- there being provided on the fluid guide device (9) two set-up sites (38, 41), the first set-up site (39) of which is assigned to the outer fluid space (11), and the second set-up site (41) is assigned to the inner fluid space (71),
- each set-up site having at least one fluid passage channel (59) which can be blocked optionally for retrofitting the fluid guide device (9), and
- the fluid guide device having an adapter plate (9) penetrated by the fluid passage channels (59) and which forms on the peripheral side a seal (35) between the inlet part (5) and the filtration part (11) of the filter housing (1) and which has a coaxial socket (49) projecting into the filtration part (11) as an element receiver for the filter element (13) and for forming a flow path leading into the inner fluid space (71) of the filter element,
- **characterised in that** the fluid passage channels (59) of the first set-up site (39) are located on the adapter plate (9) on a circular line concentric to the main axis (19), with a radius chosen such that the fluid passage channels (59) form flow paths to the exterior of the filter element (13),
- that the fluid passage channels (59) of the second set-up site (41) are located on the adapter plate (9) on a circular line concentric to the main axis (19), with a radius chosen such that the fluid passage channels (59) form flow paths into the interior of the socket (49) serving as an element receiver,
- that the fluid passage channels (59) of the fluid guide device (9) are made as a seat for bypass valves (61) pre-tensioned into the blocking position and optionally insertable therein, and
- that the bypass valves are formed by valve inserts (61) which can be inserted as a pre-mounted functional unit, including a spring-loaded closing part (65) and a valve seat (67), into selected fluid passage channels (59).

2. The filter device according to Claim 1, **characterised in that** the filter housing (1) defines a main axis (19) and that the fluid passage channels (59) of the first set-up site (39) are located at a greater distance from the main axis (19) than the fluid passage channels (59) of the second set-up site (41).

3. The filter device according to Claim 2, **characterised in that** a circularly cylindrical filter element (13) is provided with a filter medium (17) adjoining a fluid-permeable support tube (15), the filter element (13) being able to be held in the filter housing (1) such that the support tube (15) extends concentrically to the main axis (19).

4. The filter device according to any of the preceding claims, **characterised in that** the fluid guide device (9) is located in the filter housing (1) between an inlet part (5) having the fluid inlet (7) and bordering a housing cover (3) and a filtration part (11) offset to the latter axially and forming the outer fluid space.

5. The filter device according to any of the preceding claims, **characterised in that** when the fluid guide device (9) is outfitted such that it forms a flow path to the outer fluid space (11), a filter element (13) is provided with a support tube (15) that borders the inner fluid space (71) and is surrounded on the exterior by the filter medium (17).

6. The filter device according to any of Claims 1 to 4, **characterised in that** when the fluid guide device (9) is outfitted such that it forms a fluid path to the inner fluid space (71), a filter element (13) is provided with a support tube (15) that is nearest the outer fluid space (11) and is provided on its interior with the filter medium (17).

## Revendications

1. Dispositif de filtration
- comprenant un corps (1) de filtre et au moins un élément (13) de filtre peut être reçu dans le corps (1) du filtre et qui a un espace (71) intérieur pour du fluide délimité par un milieu (17) filtrant, qui peut être traversé par du fluide à épurer et qui sépare l'espace (71) intérieur pour du fluide d'un espace (11) extérieur pour du fluide se trouvant dans le corps (1) du filtre,
- dans lequel le corps (1) du filtre a une entrée (7) pour du fluide et une sortie pour du fluide épuré,
- dans lequel, en aval de l'entrée (7) pour du fluide, est monté un dispositif (9) de conduite de fluide, qui peut être transformé de manière à former au choix un trajet d'écoulement entre l'entrée (7) pour du fluide et l'espace (11) extérieur pour du fluide ou entre l'entrée (7) pour du fluide et l'espace (71) intérieur pour du fluide se trouvant dans l'élément (13) de filtre,
- dans lequel il y a, sur le dispositif (9) de conduite de fluide, deux emplacements (39, 41) de conversion, dont le premier (39) est associé à l'espace (11) extérieur pour du fluide, tandis que le deuxième emplacement (41) de conversion est associé à l'espace (71) intérieur pour du fluide,
- dans lequel chaque emplacement de conversion a au moins un canal (59) de passage de fluide, lesquels peuvent être fermés au choix pour la conversion du dispositif (9) de conduite de fluide, et
- dans lequel le dispositif de conduite de fluide a une plaque (9) d'adaptateur, qui est traversée par les canaux (59) de passage du fluide, qui forment, du côté du pourtour, une étanchéité (35) entre la partie (5) d'entrée et la partie (11) de filtration du corps (1) de filtre, et qui a, comme logement pour l'élément (13) de filtre et pour la formation d'un trajet d'écoulement dans son espace (71) intérieur pour du fluide, une tubulure (49) coaxiale faisant saillie dans la partie (11) de filtration,
- **caractérisé en ce que** les canaux (59) de passage de fluide du premier emplacement (39) de conversion sont disposés sur la plaque (9) d'adaptateur sur une ligne circulaire concentrique à l'axe (19) principal, dont le rayon est choisi de manière à ce que les canaux (59) de passage de fluide forment des trajets d'écoulement allant vers le côté extérieur de l'élément (13) de filtre,
- **en ce que** les canaux (59) de passage de fluide du deuxième emplacement (41) de conversion sont disposés sur la plaque (9) d'adaptateur sur une ligne circulaire concentrique à l'axe (19) principal, dont le rayon est choisi de manière à ce que les canaux (59) de passage de fluide forment des trajets d'écoulement à l'intérieur de la tubulure (49) servant de logement pour l'élément,
- **en ce que** les canaux (59) de passage de fluide du dispositif (9) de conduite de fluide sont constitués sous la forme de siège pour des vannes (61) de dérivation pouvant y être insérées à volonté et précontraintes dans la position de fermeture, et
- **en ce que** les vannes de dérivation sont formées par des inserts (61) formant vannes, qui peuvent être insérés en tant qu'une unité fonctionnelle montée à l'avance, incluant une partie (5) de fermeture chargée par un ressort et un siège (67) de vanne dans des canaux (59) sélectionnés de passage de fluide.

2. Dispositif de filtration suivant la revendication 1, **caractérisé en ce que** le corps (1) de filtre définit un axe (19) principal et **en ce que** les canaux (59) de passage de fluide du premier emplacement (39) de conversion sont mis à une distance plus grande de l'axe (19) principal que les canaux (59) de passage de fluide du deuxième emplacement (41) de conversion.

3. Dispositif de filtration suivant la revendication 2, **caractérisé en ce qu'**il est prévu un élément (13) de filtre cylindrique de section circulaire et ayant un milieu (17) filtrant s'appliquant à un tube (15) d'appui perméable au fluide, l'élément (13) de filtre pouvant être reçu dans le corps (1) de filtre, de manière à ce que le tube (15) d'appui s'étende concentriquement à l'axe (19) principal.

4. Dispositif de filtration suivant l'une des revendications précédentes, **caractérisé en ce que** le dispositif (9) de conduite de fluide est mis dans le corps (1) du filtre entre une partie (5) d'entrée voisine du couvercle (3) du corps et ayant une entrée (7) pour du fluide et une partie (11) de filtration décalée axialement par rapport à celle-ci et formant l'espace extérieur pour du fluide.

5. Dispositif de filtration suivant l'une des revendications précédentes, **caractérisé en ce que**, lorsque le dispositif (9) de conduite de fluide forme un trajet d'écoulement vers l'espace (11) extérieur pour du fluide, il est prévu un élément (13) de filtre ayant un tube (15) d'appui, qui est voisin de l'espace (71) intérieur pour du fluide et qui est enveloppé du côté extérieur par du milieu (17) filtrant.

6. Dispositif de filtration suivant l'une des revendications 1 à 4, **caractérisé en ce que**, lorsque le dispositif (9) de conduite de fluide forme un trajet d'écoulement allant vers l'espace (71) intérieur pour du fluide, il est prévu un élément (13) de filtre ayant un tube (15) d'appui, qui est au plus près de l'espace (11) extérieur pour du fluide et qui est pourvu du milieu (17) filtrant sur sont côté intérieur.
